# EUROPÄISCHE PATENTSCHRIFT

(11) **EP 2 773 519 B1**
(45) Veröffentlichungstag und Bekanntmachung des Hinweises auf die Patenterteilung: **04.04.2018**
(21) Anmeldenummer: 12766936.4
(22) Anmeldetag: 17.09.2012
(51) Int. Cl.: B60C 11/12, B29D 30/06

(54) **FAHRZEUGLUFTREIFEN**
VEHICLE TIRE
PNEU POUR VÉHICULE

(30) Priorität: 02.11.2011 DE 102011054981; 14.02.2012 DE 102012101149
(43) Veröffentlichungstag der Anmeldung: 10.09.2014
(73) Patentinhaber: Continental Reifen Deutschland GmbH, 30165 Hannover (DE)
(72) Erfinder: SENG, Matthias, 30449 Hannover (DE); DIENSTHUBER, Franz, 30559 Hannover (DE)
(74) Vertreter: Finger, Karsten
(86) Internationale Anmeldenummer: PCT/EP2012/068187
(87) Internationale Veröffentlichungsnummer: WO 2013/064300

(56) Entgegenhaltungen:
- EP-A1- 0 515 349
- EP-A1- 1 013 480
- WO-A1-2010/133940

## Beschreibung

Die Erfindung betrifft einen Fahrzeugluftreifen mit einem Laufstreifen, welcher sich aus Profilelementen zusammensetzt, wobei zumindest ein Profilelement mit einem Feineinschnitt versehen ist, welcher sich in radialer Richtung von der Laufstreifenperipherie ins Profilelementinnere erstreckt und welcher korrespondierende Feineinschnittwände in Form einer sinusförmigen Welle aufweist. Die Erfindung betrifft ebenfalls eine Vulkanisierform zur Vulkanisation eines vorgenannten Fahrzeugluftreifens.

Ein derart ausgeführter Fahrzeugluftreifen ist hinreichend bekannt. Es ist bei Laufstreifenprofilen von Winterreifen üblich, Feineinschnitte innerhalb der erhabenen Profilelemente vorzusehen. Feineinschnitte sind Einschnitte, welche innerhalb der Profilelemente wie Profilbänder oder Profilblöcken mit einer Breite von 0,3 mm bis 0,7 mm und einer Länge von 8 mm bis 35 mm angeordnet sind. Die Feineinschnitte dienen bei winterlichen Bedingungen u.a. dazu, Schnee aufzunehmen, um die Schnee/Schnee - Reibung zu erhöhen und derart eine bessere Haftung des Reifens auf winterlicher Fahrbahn zu ermöglichen. Zudem werden eine Vielzahl an Kanten zur Verfügung gestellt, die in die winterliche Fahrbahn eingreifen können.

Es gibt eine Vielzahl an bekannten Ausbildungen von Feineinschnitten. Am bekanntesten ist eine Ausbildung, bei der der Feineinschnitt in Profilaufsicht sinusförmig ausgebildet ist und in seinem Tiefenverlauf innerhalb des Profilblockes unverändert ist (2-dimensionaler Feineinschnitt).

Es sind aber auch verschiedenste Feineinschnitte bekannt, deren Ausbildung sich mit dem Tiefenverlauf innerhalb des Profilblockes ändert, z.B. eine veränderliche Amplitude aufweisen (3-dimensionaler Feineinschnitt).

Aus der EP 0 515 349 A1, der EP 1 013 480 A1 und aus der WO 2010/133940 A1 ist es bekannt, dass sich die Form des Feineinschnittes verändert. Ein Feineinschnitt reicht zumeist von einer Profilblockwand zur anderen Profilblockwand und quert den Profilblock vollständig. Die Wellenausbildung von wellenförmigen Feineinschnitten ist meist nur im mittigen Bereich des Feineinschnittes ausgebildet, während die beiden axialen Enden des Feineinschnittes beispielsweise als Gerade ausgebildet sind.

Da sich während der Benützung eines Reifens über dessen Haltbarkeitsdauer die Profiltiefe im Laufstreifen deutlich verringert, ist eine Änderung der Profilsteifigkeit, insbesondere der Steifigkeit der einzelnen Profilelemente, unumgänglich. Bei den üblichen Feineinschnittausführungen folgt die Änderung der Profilelementsteifigkeit einer eher streng monotonen Funktion. Am geringsten ist die Steifigkeit in Profilelementen mit gerade ausgeführten Feineinschnitten. In diesem Fall kann die Profilsteifigkeit durch geringere Einschnitttiefen erhöht werden. Bei Feineinschnitten, die im Wesentlichen einer Wellenform folgen, wird die Profilelementsteifigkeit eher wenig, bei sogenannten 3D-Feineinschnitten stark erhöht. Die bekannten Maßnahmen führen jedoch lediglich zu einer Verschiebung des Steifigkeitsminimums auf ein höheres Niveau. Derartige Winterreifen zeigen daher ein deutliches Nachlassen der Winterperformance mit zunehmendem Abrieb. Der Erfindung liegt die Aufgabe zu Grunde, die Performance eines insbesondere für einen Wintereinsatz vorgesehenen Reifens zu verbessern, insbesondere sollen die Eigenschaften des Reifens auf Schnee sowie auf trockenen Fahrbahnen möglichst ausgewogen und gleichermaßen gut sein.
Der Erfindung liegt ebenfalls die Aufgabe zugrunde eine Vulkanisierform für einen vorgenannten Reifen zur Verfügung zu stellen.

Gelöst wird die gestellte Aufgabe in Bezug auf den Fahrzeugreifen erfindungsgemäß dadurch, dass sich (ausschließlich) die Wellenlänge des Feineinschnittes - ausgehend von der Laufstreifenperipherie in Richtung Profilelementinneres -- verringert, so dass sich der wellenförmige Feineinschnittbereich in Richtung Profilelementinneres in seiner Breite verringert. Die Amplitude der Welle bleibt über den Tiefenverlauf des Feineinschnittes gleich.. Bei wellenförmigen Feineinschnitten, die an ihren beiden axialen Enden als Gerade ausgebildet sind, verlängern sich die als Gerade ausgebildeten axialen Endabschnitte entsprechend der Verringerung der Breite des wellenförmigen Abschnittes des Feineinschnittes.

Derart ausgeführte Feineinschnitte in Profilelementen von Laufstreifen in Winterreifen beeinflussen einerseits die Steifigkeit der Profilelemente und damit des Laufstreifens, so dass eine Verbesserung der Trockeneigenschaften erreicht ist. Andererseits wird bei an- bzw. abgefahrenen Reifen dem Nachlassen in der Seitenführung auf winterlichen Fahrbahnen entgegengewirkt.

Die verbesserten Trockeneigenschaften des Winterreifens wie Trockenbremsen und Fahreigenschaften insbesondere beim Neu- oder wenig angefahrenen Reifen werden dadurch erreicht, dass durch die sich im Tiefenverlauf des Feineinschnittes verringernde Wellenlänge des sinusförmigen Feineinschnittes weniger Abschnitte vorhanden sind, die etwa 90° in Bezug auf die Umfangsrichtung des Reifens ausgerichtet sind. Bei Biege- und Schubbelastung der Profilelemente erfolgt eine Verzahnung der korrespondierenden Feineinschnitte und es stellt sich eine erhöhte Gummi-/Gummireibung der korrespondierenden Feineinschnittwände über deren Tiefenverlauf ein, so dass die Steifigkeit des Profilelementes vorteilhaft erhöht ist.

Die verbesserte Seitenführung auf winterlicher Fahrbahn des an- bzw. abgefahrenen Reifens wird dadurch erreicht, dass die im Profilelementinneren verringerte Wellenlänge des Feineinschnittes einen kürzeren Abstand - in axialer Richtung betrachtet - zwischen den etwa in Reifenumfangsrichtung ausgeprägten Kanten bewirkt. Der Schneegriff ist eine Funktion der Summe der Kantenlänge in 90°-Richtung in Bezug auf die Umfangsrichtung zur Belastungsrichtung, Kantentiefe und Kantenabstand.

Vorteilhaft ist es, wenn sich die Wellenlänge des Feineinschnittes in seiner Erstreckung in das Profilelementinnere stetig verringert.

Zweckmäßig ist es, wenn die Veränderung, vorzugsweise Verringerung der Wellenlänge auf nur einer Seite des Feineinschnittes erfolgt. Hierbei tritt der versteifende Effekt insbesondere lateraler Belastung aus einer Richtung auf, während die Blockflexibilität bei Belastung aus der entgegengesetzten Richtung nur geringfügig beeinflusst wird. Dieser Effekt kann zur gezielten Einstellung der Reifeneigenschaften auf winterlicher und trockener Fahrbahn ausgenutzt werden.

Vorteilhaft ist es, wenn die Veränderung, vorzugsweise Verringerung der Wellenlänge auf beiden Seiten des Feineinschnittes vorzugsweise symmetrisch erfolgt. Es ist eine maximale laterale und longitudinale Versteifung für bestmögliche Fahreigenschaften auf trockener oder nasser Fahrbahn erreicht.

Zur guten Entformbarkeit des Fahrzeugreifens aus der Vulkanisierform ist es vorteilhaft, wenn sich die Wellenlänge derart verringert, dass eine gedachte Gerade, die über den Tiefenverlauf des Feineinschnittes die Endpunkte einer Seite der wellenförmigen Ausbildung verbindet, einen Winkel zur Radialen von 5° bis 20° einnimmt.

Gelöst wird die gestellte Aufgabe in Bezug auf die Vulkanisierform, welche Formflächen zur Formgebung der Reifenoberfläche des heizzupressenden Fahrzeugluftreifens aufweist, wobei wenigstens ein Lamellenblech angeordnet ist, welches den Feineinschnitt in den Laufstreifen des heizzupressenden Fahrzeugluftreifens prägt, wobei sich das Lamellenblech in radialer Richtung von der Formfläche in den Formenhohlraum der Vulkanisierform erstreckt und welches in Aufsicht die Form einer sinusförmigen Welle aufweist erfindungsgemäß dadurch, dass sich die Wellenlänge des Feineinschnittes - ausgehend von dem Formenhohlraum in Richtung Formfläche -verringert, so dass sich der wellenförmige Lamellenblechbereich in Richtung Formfläche in seiner Breite verringert.

Weitere Merkmale, Vorteile und Einzelheiten der Erfindung werden nun anhand der Zeichnungen, die ein schematisches Ausführungsbeispiel darstellen, näher beschrieben. Dabei zeigen die
Fig. 1 eine Aufsicht auf einen Profilblock in drei unterschiedlich angefahrenen Zuständen sowie rechts neben den Profilblöcken einen Längsschnitt durch diesen Profilblock;
Fig. 2 einen Längsschnitt durch den Profilblock der oberen Abbildung der Fig. 1 im Bereich eines Feineinschnittes.

Die Erfindung befasst sich mit einer besonderen Ausführung von Feineinschnitten in Profilelementen von Laufstreifen, wie Profilblöcke oder Profilrippen, in Fahrzeugluftreifen, insbesondere Winterreifen für Personenkraftwagen.

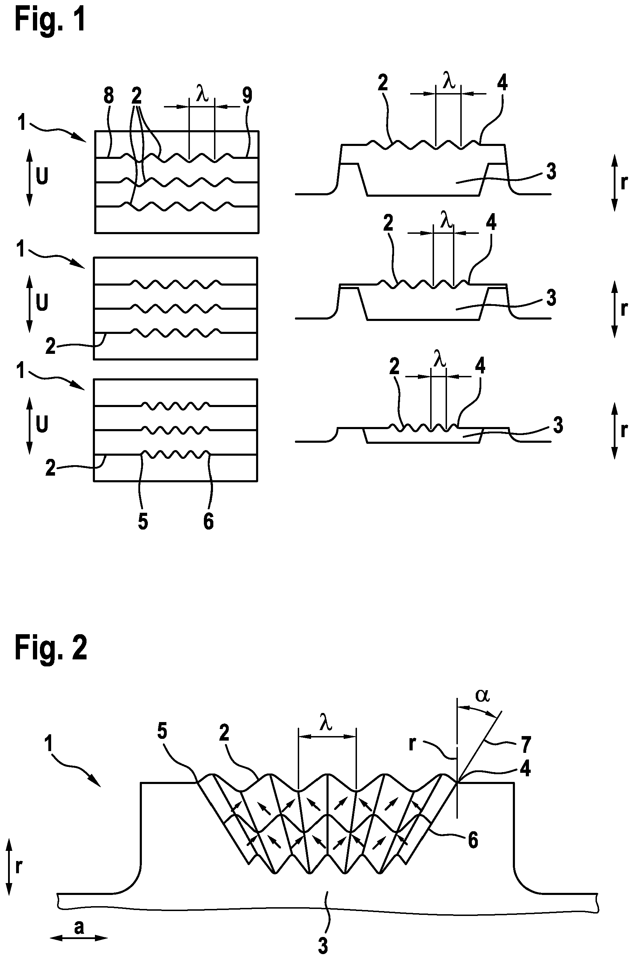

Die Fig. 1 zeigt beispielhaft ein Profilelement für einen Laufstreifen in der Form eines Profilblockes 1 mit drei identischen, in Aufsicht sinusförmig ausgebildeten Feineinschnitten 2 sowie rechts neben dem jeweiligen Profilblock 1 eine Ansicht der Außenkontur eines Feineinschnittes 2 an der Blockperipherie 4 im Längsschnitt dieses Profilblockes 1. Der Feineinschnitt 2 verläuft in radialer Richtung des Reifens von der Blockperipherie 4 in das Profilblockinnere 3 hinein. Die beiden links und rechts an den sinusförmigen Abschnitt anschließenden randlichen Abschnitte 8, 9 sind als Gerade ausgebildet. Auf der rechten Figurenseite ist die Oberfläche des Feineinschnittes aus darstellungstechnischen Gründen gewellt dargestellt, in Realität ist die Oberfläche des Profilblockes 1 eben ausgebildet. Die Wellenausbildung des Feineinschnittes 2 liegt in Realität in der Ebene der Straßen-Kontaktfläche des Profilblockes, die Amplituden stehen senkrecht auf der Blattebene.

In der obersten Abbildung der Fig. 1 ist ein Profilblock 1 eines Neureifens dargestellt, in der mittleren Abbildung der Fig. 1 ist dieser Profilblock 1 angefahren und in der unteren Abbildung ist dieser Profilblock 1 stark angefahren dargestellt. Die Feineinschnitte 2 weisen korrespondierende Feineinschnittwände in Form einer sinusförmigen Welle auf. Die Wellenlänge λ, des Feineinschnittes 2 verringert sich - ausgehend von der Blockperipherie 4 in Richtung Profilelementinneres 3 - auf beiden Seiten 5, 6 des Feineinschnittes symmetrisch und stetig, so dass der wellenförmige Bereich des Feineinschnittes 2 in Richtung Profilelementinneres in seiner axialen Breite verringert wird. Die Amplitude des Feineinschnittes 2 bleibt über deren Tiefenverlauf konstant.

Die Fig. 2 zeigt einen Längsschnitt durch den Profilblock 1 der obersten Zeile der Fig. 1 im Bereich eines Feineinschnittes 2. Auch hier ist die in der Peripherie 4 liegende Oberfläche des Feineinschnittes 2 aus darstellungstechnischen Gründen gewellt dargestellt, in Realität ist die Oberfläche des Profilblockes 1 eben ausgebildet, die Amplituden stehen senkrecht auf der Blattebene. Die Wellenlänge λ verringert sich über den Tiefenverlauf des Feineinschnittes 2 derart, dass eine gedachte Gerade, die über den Tiefenverlauf des Feineinschnittes die Endpunkte einer Seite des wellenförmigen Feineinschnittes verbindet, einen Winkel α zur Radialen von 5° bis 20° einnimmt.

### Bezugszeichenliste

- 1: Profilblock
- 2: Feineinschnitt
- 3: Profilblockinneres
- 4: Profilblockperipherie
- 5: eine Seite des Feineinschnittes
- 6: andere Seite des Feineinschnittes
- 7: gedachte Gerade
- 8: randlicher Abschnitt
- 9: randlicher Abschnitt

- λ: Wellenlänge
- r: Radiale Richtung
- u: Umfangsrichtung
- a: axiale Richtung

## Patentansprüche

1. Fahrzeugluftreifen mit einem Laufstreifen, welcher sich aus Profilelementen (1) zusammensetzt, wobei zumindest ein Profilelement (1) mit einem Feineinschnitt (2) versehen ist, welcher sich in radialer Richtung (r) von der Laufstreifenperipherie (4) ins Profilelementinnere (3) erstreckt und welcher korrespondierende Feineinschnittwände in Form einer sinusförmigen Welle aufweist,
**dadurch gekennzeichnet,**
**dass** sich die Wellenlänge (λ) des Feineinschnittes (2) - ausgehend von der Laufstreifenperipherie (4) in Richtung Profilelementinneres (3) - verringert, so dass sich der wellenförmige Feineinschnittbereich in Richtung Profilelementinneres (3) in seiner Breite verringert.

2. Fahrzeugluftreifen nach Anspruch 1, **dadurch gekennzeichnet, dass** sich die Wellenlänge (λ) des Feineinschnittes (2) in seiner Erstreckung in das Profilelementinnere (3) stetig verringert.

3. Fahrzeugluftreifen nach einem der vorangehenden Ansprüche, **dadurch gekennzeichnet, dass** die Veränderung, vorzugsweise Verringerung der Wellenlänge (λ) an nur einer Seite (5 oder 6) des Feineinschnittes (2) erfolgt.

4. Fahrzeugluftreifen nach einem oder mehreren der Ansprüche 1 bis 2, **dadurch gekennzeichnet, dass** die Veränderung, vorzugsweise Verringerung der Wellenlänge (λ) auf beiden Seiten (5, 6) des Feineinschnittes (2) vorzugsweise symmetrisch erfolgt.

5. Fahrzeugluftreifen nach einem oder mehreren der vorangehenden Ansprüche 2 - 4, **dadurch gekennzeichnet, dass** sich die Wellenlänge (λ) derart verringert, dass eine gedachte Gerade (7), die über den Tiefenverlauf des Feineinschnittes (2) die Endpunkte der wellenförmigen Ausbildung verbindet, einen Winkel zur Radialen (r) von 5° bis 20° einnimmt.

6. Vulkanisierform zur Vulkanisation eines Fahrzeugluftreifens gemäß einem oder mehrerer der Ansprüche 1 - 5, wobei die Vulkanisierform Formflächen zur Formgebung der Reifenoberfläche des heizzupressenden Fahrzeugluftreifens aufweist und wobei wenigstens ein Lamellenblech angeordnet ist, welches den Feineinschnitt in den Laufstreifen des heizzupressenden Fahrzeugluftreifens prägt, wobei sich das Lamellenblech in radialer Richtung von der Formfläche in den Formenhohlraum der Vulkanisierform erstreckt und welches in Aufsicht die Form einer sinusförmigen Welle aufweist, **dadurch gekennzeichnet, dass** sich die Wellenlänge des Feineinschnittes - ausgehend von dem Formenhohlraum in Richtung Formfläche - verringert, so dass sich der wellenförmige Lamellenblechbereich in Richtung Formfläche in seiner Breite verringert.

## Claims

1. Pneumatic vehicle tyre with a tread, which is made up of profile elements (1), at least one profile element (1) being provided with a sipe (2), which extends in the radial direction (r) from the tread periphery (4) into the profile element interior (3) and which has corresponding sipe walls in the shape of a sine wave,
**characterized in that** the wave length (λ) of the sipe (2) decreases - from the tread periphery (4) in the direction of the profile element interior (3) - so that the wave-shaped sipe region decreases in its width in the direction of the profile element interior (3).

2. Pneumatic vehicle tyre according to Claim 1, **characterized in that** the wave length (λ) of the sipe (2) steadily decreases as it extends into the profile element interior (3).

3. Pneumatic vehicle tyre according to one of the preceding claims, **characterized in that** the change, preferably decrease, in the wave length (λ) takes place on only one side (5 or 6) of the sipe (2).

4. Pneumatic vehicle tyre according to either or both of Claims 1 and 2, **characterized in that** the change, preferably decrease, in the wave length (λ) takes place on both sides (5, 6) of the sipe (2), preferably symmetrically.

5. Pneumatic vehicle tyre according to one or more of the preceding Claims 2-4, **characterized in that** the wave length (λ) decreases in such a way that an imaginary line (7) joining the end points of the wave-shaped formation over the course of the depth of the sipe (2) assumes an angle in relation to the radial (r) of 5° to 20°.

6. Vulcanizing mould for vulcanizing a pneumatic vehicle tyre according to one or more of Claims 1-5, the vulcanizing mould having moulding surfaces for moulding the tyre surface of the pneumatic vehicle tyre to be hot-pressed, at least one knife blade that forms the sipe as an impression in the tread of the pneumatic vehicle tyre to be hot-pressed being arranged, the knife blade extending in the radial direction from the moulding surface into the mould cavity of the vulcanizing mould and, when viewed from above, having the shape of a sine wave, **characterized in that** the wave length of the sipe decreases - from the mould cavity in the direction of the moulding surface - so that the wave-shaped knife blade region decreases in its width in the direction of the moulding surface.

## Revendications

1. Pneumatique pour véhicule avec une bande de roulement, qui se compose d'éléments profilés (1), dans lequel au moins un élément profilé (1) est muni d'une incision fine (2), qui s'étend en direction radiale (r) de la périphérie de la bande de roulement (4) à l'intérieur de l'élément profilé (3) et qui présente des parois d'incision fine correspondantes sous la forme d'une onde sinusoïdale, **caractérisé en ce que** la longueur d'onde (λ) de l'incision fine (2) - à partir de la périphérie de la bande de roulement (4) en direction de l'intérieur de l'élément profilé (3) - diminue de telle manière que la région de l'incision fine ondulée diminue de largeur en direction de l'intérieur de l'élément profilé (3).

2. Pneumatique pour véhicule selon la revendication 1, **caractérisé en ce que** la longueur d'onde (λ) de l'incision fine (2) diminue en continu dans son extension dans l'intérieur de l'élément profilé (3).

3. Pneumatique pour véhicule selon l'une quelconque des revendications précédentes, **caractérisé en ce que** la variation, de préférence la diminution de la longueur d'onde (λ) ne se produit que sur un côté (5 ou 6) de l'incision fine (2).

4. Pneumatique pour véhicule selon une ou plusieurs des revendications précédentes 1 à 2, **caractérisé en ce que** la variation, de préférence la diminution de la longueur d'onde (λ) se produit, de préférence de façon symétrique, sur les deux côtés (5, 6) de l'incision fine (2).

5. Pneumatique pour véhicule selon une ou plusieurs des revendications 2 à 4, **caractérisé en ce que** la longueur d'onde (λ) diminue de telle manière qu'une droite virtuelle (7), qui relie les points d'extrémité de la forme ondulée par l'allure de la profondeur de l'incision fine (2), forme un angle de 5° à 20° avec une radiale (r).

6. Moule de vulcanisation d'un pneumatique pour véhicule selon une ou plusieurs des revendications 1 à 5, dans lequel le moule de vulcanisation présente des faces de moule destinées au formage de la surface de pneumatique du pneumatique pour véhicule à presser à chaud et dans lequel il se trouve au moins une tôle à lamelles, qui imprime l'incision fine dans la bande de roulement du pneumatique pour véhicule à presser à chaud, dans lequel la tôle à lamelles s'étend en direction radiale de la face de moule dans la cavité de moule du moule de vulcanisation et qui vue en plan présente la forme d'une onde sinusoïdale, **caractérisé en ce que** la longueur d'onde de l'incision fine - à partir de la cavité de moule en direction de la face de moule - diminue de telle manière que la région ondulée de la tôle à lamelles diminue de largeur en direction de la face de moule.
